# EUROPEAN PATENT APPLICATION

(11) **EP 4 704 220 A1**
(43) Date of publication of application: **04.03.2026**
(21) Application number: 25197778.1
(22) Date of filing: 25.08.2025
(51) Int. Cl.: H01M 10/613, H01M 10/63, H01M 10/6563, H01M 50/249

(54) **AIR CIRCULATION FOR HEAT TRANSFER IN A MATERIAL HANDLING VEHICLE BATTERY**

(30) Priority: 28.08.2024 US 202463688186 P
(71) Applicant: The Raymond Corporation, Greene, NY 13778 (US)
(72) Inventor: HARRIS, Daniel, Honeoye Falls, NY 14472 (US); BARTER, Stuart, Livonia, NY 14487 (US); MATHIAS, Mark, Pittsford, NY 14534 (US); FOLEY, Robert S., Rochester, NY 14610 (US)
(74) Representative: Zacco Sweden AB

(57) **Abstract**

An industrial battery design for use in a material handling vehicle (100). The battery (200) includes a metal base plate (270), a battery case (280) secured to the metal base plate (270) to form a sealed enclosure for the battery (200), a row of one or more battery cells (230, 240) disposed above the metal base plate (270), and a top tray (210) disposed above the row of battery cells (230, 240). The top tray (210) includes a first fan (212) to blow air in a first direction within the battery case (280) and a second fan (218) to blow air in a second direction within the battery case (280), where the second direction is opposite the first direction.

## Description

### CROSS-REFERENCE TO RELATED APPLICATIONS

This application claims the benefit of and priority to U.S. Provisional Patent Application No. 63/688,186 filed August 28, 2024, the entirety of which is incorporated by reference herein.

### BACKGROUND

Various types of batteries have been used to provide power to material handling vehicles (MHVs) and to provide power in other industrial applications. However, improved industrial battery designs are generally desired.

### BRIEF SUMMARY

The present disclosure relates generally to an industrial battery design that includes an air circulation system.

In one aspect, the disclosure provides a material handling vehicle. The material handling vehicle includes a battery compartment and a battery sealed within a battery case and disposed within the battery compartment. The battery includes a metal base plate, a row of one or more battery cells disposed above the metal base plate, and a top tray disposed above the row of battery cells. The top tray includes a first fan to blow air in a first direction within the battery case and a second fan to blow air in a second direction within the battery case, where the second direction is opposite the first direction.

In another aspect, the disclosure provides a battery for a material handling vehicle. The battery includes a metal base plate, a battery case secured to the metal base plate to form a sealed enclosure for the battery, a row of one or more battery cells disposed above the metal base plate, and a top tray disposed above the row of battery cells. The top tray includes a first fan to blow air in a first direction within the battery case and a second fan to blow air in a second direction within the battery case, where the second direction is opposite the first direction.

In yet another aspect, the disclosure provides another battery for a material handling vehicle. The battery includes a metal base plate, a battery case secured to the metal base plate to form a sealed enclosure for the battery, a row of one or more battery cells disposed above the metal base plate, and a top tray disposed above the row of battery cells. The top tray includes a first fan disposed in an upper left quadrant of the top tray to blow air in a first direction within the battery case, a second fan disposed in an upper right quadrant of the top tray to blow air in a second direction within the battery case, a third fan disposed in a lower left quadrant of the top tray to blow air in the first direction within the battery case, and a fourth fan disposed in a lower right quadrant of the top tray to blow air in the second direction within the battery case, where the first direction is away from the metal base plate and the row of battery cells and the second direction is towards the metal base plate and the row of battery cells.

The foregoing and other aspects and advantages of the present disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the present disclosure.

### BRIEF DESCRIPTION OF THE DRAWINGS

The present disclosure will be better understood and features, aspects, and advantages other than those set forth above will become apparent when consideration is given to the following detailed description thereof. Such detailed description references the following drawings.
FIG. 1 is a perspective illustration of an example material handling vehicle including a battery compartment for a battery, in accordance with some aspects of the disclosure.
FIG. 2 is a block diagram illustrating components of an example battery that can be used with the material handling vehicle of FIG. 1, in accordance with some aspects of the disclosure.
FIG. 3 is an illustration showing an example implementation of the battery of FIG. 2, in accordance with some aspects of the disclosure.
FIG. 4 is an illustration showing an example battery case for the battery of FIG. 2, in accordance with some aspects of the disclosure.
FIG. 5 is an illustration showing example components of an electronics tray of the battery of FIG. 2, in accordance with some aspects of the disclosure.
FIG. 6 is an example schematic showing various components of the battery of FIG. 2, in accordance with some aspects of the disclosure.
FIG. 7 is an illustration showing an example implementation of a fan that can be included as part of a top tray of the battery of FIG. 2, in accordance with some aspects of the disclosure.
FIG. 8 is another illustration showing an example implementation of fans that can be included as part of the top tray of the battery of FIG. 2, in accordance with some aspects of the disclosure.
FIG. 9 is an illustration showing an example temperature distribution across the battery cells during operation of the battery of FIG. 2, in accordance with some aspects of the disclosure.
FIG. 10 is an illustration showing an example temperature distribution across the battery case during operation of the battery of FIG. 2, in accordance with some aspects of the disclosure.
FIG. 11 is an illustration showing an example temperature distribution across the battery cells accounting for contactor temperature during operation of the battery of FIG. 2, in accordance with some aspects of the disclosure.
FIG. 12 is an illustration showing an example temperature distribution across the battery case accounting for contactor temperature during operation of the battery of FIG. 2, in accordance with some aspects of the disclosure.
FIG. 13 is an illustration showing an example temperature distribution across the electronics tray during operation of the battery of FIG. 2, in accordance with some aspects of the disclosure.
FIG. 14 is an illustration showing an example air flow velocity distribution during operation of the battery of FIG. 2, in accordance with some aspects of the disclosure.
FIG. 15 is another illustration showing an example air flow velocity distribution during operation of the battery of FIG. 2, in accordance with some aspects of the disclosure.
FIG. 16 is an illustration showing an example pressure distribution during operation of the battery of FIG. 2, in accordance with some aspects of the disclosure.
FIG. 17 is a flowchart illustrating an example process for providing air circulation within the battery of FIG. 2, in accordance with some aspects of the disclosure.

### DETAILED DESCRIPTION

Before any aspects of the invention are explained in detail, it is to be understood that the invention is not limited in its application to the details of construction and the arrangement of components set forth in the following description or illustrated in the following drawings. The invention is capable of other aspects and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use aspects of the present disclosure. Various modifications to the illustrated aspects will be readily apparent to those skilled in the art, and the generic principles herein can be applied to other aspects and applications without departing from aspects of the present disclosure. Thus, aspects of the present disclosure are not intended to be limited to aspects shown but are to be accorded the widest scope consistent with the principles and features disclosed herein. The following detailed description is to be read with reference to the figures, in which like elements in different figures have like reference numerals. The figures, which are not necessarily to scale, depict selected aspects and are not intended to limit the scope of aspects of the present disclosure. Skilled artisans will recognize the examples provided herein have many useful alternatives and fall within the scope of aspects of the present disclosure.

It is also to be appreciated that material handling vehicles (MHVs) are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the various systems and methods disclosed herein are suitable for other vehicles, such as automobiles, busses, trains, tractor-trailers, farm vehicles, factory vehicles, and the like.

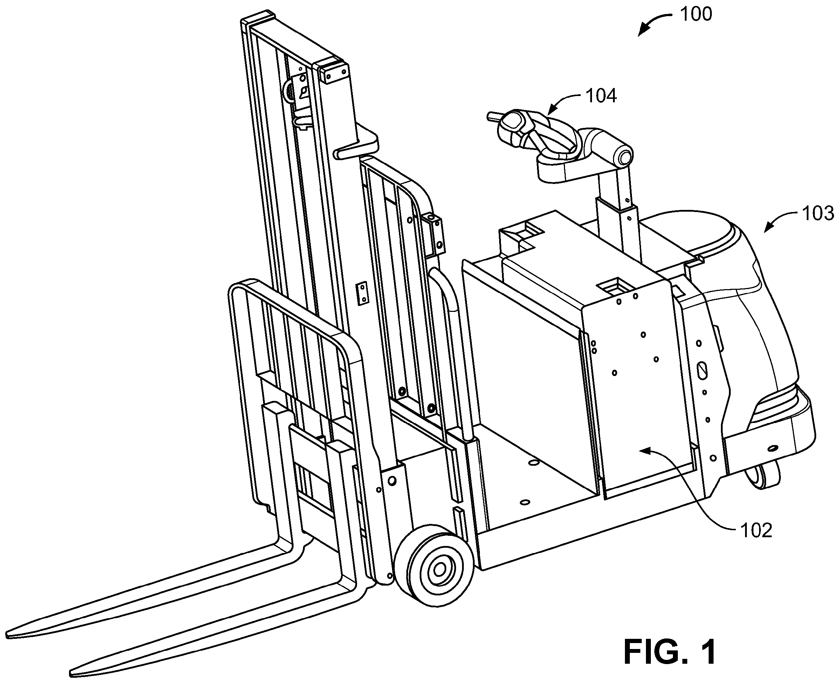

Referring to FIG. 1, a perspective illustration showing an example material handling vehicle 100 is shown, in accordance with some aspects of the disclosure. In the example of FIG. 1, the material handling vehicle 100 is a forklift truck. The material handling vehicle 100 is shown to include a battery compartment 102, a power section 103, and a handle 104. The power section 103 can include any suitable power electronics and other components for operating the material handling vehicle 100. The handle 104 can be used by an operator of the material handling vehicle 100 to steer the material handling vehicle 100. The battery compartment 102 can be used to install and house an industrial battery that powers the material handling vehicle 100, such as the various modular industrial battery configurations described below. The battery compartment 102 in the material handling vehicle 100 can include terminals, ports, wiring, and other components for connecting an industrial battery to the material handling vehicle 100. It will be appreciated that, depending on the type and configuration of material handling vehicle, battery compartments similar to the battery compartment 102 can be provided in a variety of locations and configurations.

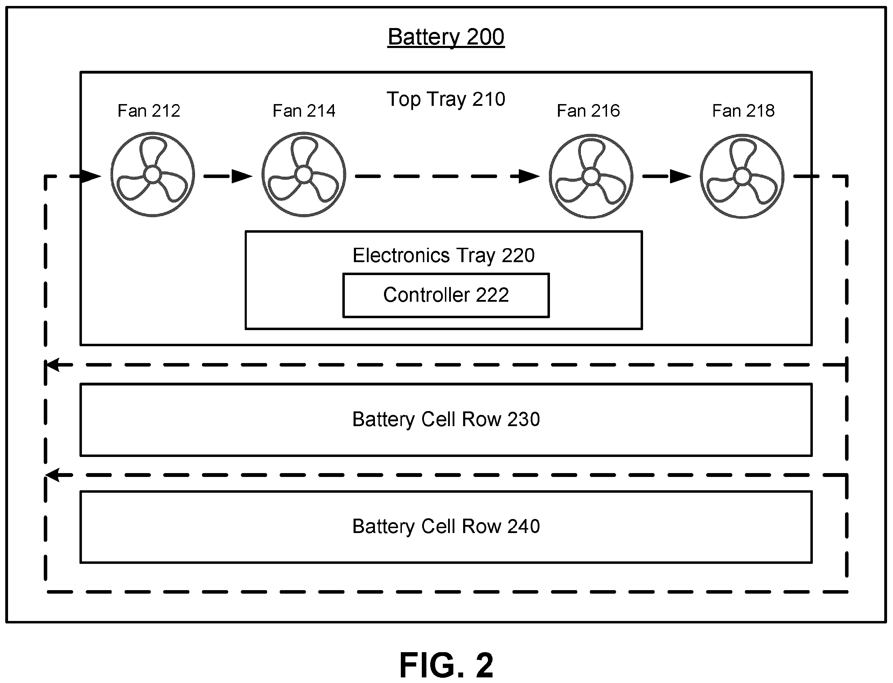

Referring to FIG. 2, a block diagram illustrating components of an example battery 200 that can be used with the material handling vehicle 100 is shown, in accordance with some aspects of the disclosure. In particular, the battery 200 can be a sealed battery and can be disposed within the battery compartment 102 of the material handling vehicle 100. As shown in FIG. 2, the battery 200 can include a top tray 210, a battery cell row 230, and a battery cell row 240. Further, as shown, the top tray 210 can include a fan 212, a fan 214, a fan 216, a fan 218, and an electronics tray 220 including a controller 222. The battery cell row 230 can be disposed above the battery cell row 240, and the top tray 210 can be disposed above the battery cell row 230. The electronics tray 220 can be an integral part of the top tray 210 in some examples. The electronics tray 220 can also be separate from the top tray 210 in some examples, where the electronics tray 220 can be disposed above the top tray 210 and secured to the top tray 210.

The battery cell row 230 and the battery cell row 240 can include any number of battery cells. Further, the battery 200 in some examples can include only one of the battery cell row 230 or the battery cell row 240 such that the battery 200 may only include a single row of one or more battery cells. Additionally, the battery 200 can include additional rows of one or more battery cells in addition to the battery cell row 230 and the battery cell row 240 such that the battery 200 may include three or more rows of battery cells in some examples. The battery cell row 230 can include one or more lithium iron phosphate (LFP) battery cells (sometimes referred to as "modules") and the battery cell row 240 can also include one or more LFP battery cells. The specific design of the air circulation system (e.g., the fan 212, the fan 214, the fan 216, and the fan 218 in the top tray 210) can be particularly advantageous in implementations where the battery 200 includes LFP battery cells as opposed to other types of battery cells. However, the battery 200 can in some examples be implemented with different types of battery cells besides LFP battery cells. The top tray 210, the electronics tray 220, the fan 212, the fan 214, the fan 216, and the fan 218 will be detailed further below.

The controller 222 can be implemented in various ways within the battery 200, including by using one or multiple separate controller devices. For example, the controller 222 can include various suitable types of processing circuitry (e.g., one or more central processing units (CPUs), etc.) and memory (e.g., volatile, non-volatile, random-access memory (RAM), read-only memory (ROM), electrically erasable programmable read-only memory (EEPROM), etc.). The memory can include one or more non-transitory machine-readable storage media having instructions stored thereon that, when executed by the processing circuitry, cause the processing circuitry to perform various operations in accordance with the instructions. The controller 222 can also include various suitable types of communications interfaces for communicating via various suitable protocols (e.g., a controller area network (CAN) interface for communicating via a CAN bus, an Ethernet interface, a serial communications interface, etc.). The controller 222 can then communicate with various components of the battery 200 (e.g., the fan 212, the fan 214, the fan 216, and the fan 218, etc.), with the material handling vehicle 100 (e.g., a vehicle controller of the material handling vehicle 100, etc.), and/or with other computing devices (e.g., a server, a personal computing device, etc.).

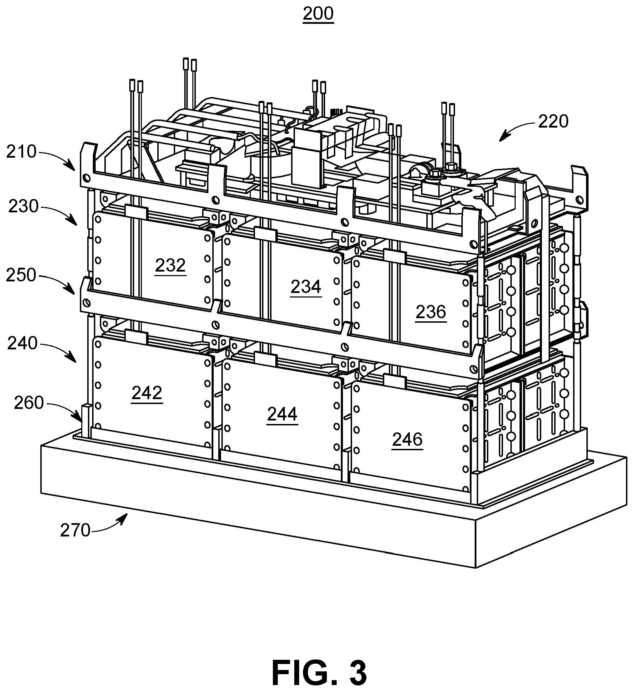

Referring to FIG. 3, an illustration showing an example implementation of the battery 200 is shown, in accordance with some aspects of the disclosure. In particular, the implementation of the battery 200 as shown in FIG. 3 does include both the battery cell row 230 and the battery cell row 240, and each of the battery cell row 230 and the battery cell row 240 include three LFP battery cells. In particular, as shown, the battery cell row 230 includes a battery cell 232, a battery cell 234, and a battery cell 236 and the battery cell row 240 includes a battery cell 242, a battery cell 244, and a battery cell 246. This 2x3 cell configuration as shown represents just one possible implementation of the battery 200. The design of various components of the battery 200, including the air circulation system (e.g., the fan 212, the fan 214, the fan 216, and the fan 218 in the top tray 210) , can be highly repeatable (and thereby efficiently manufactured) for various types of modular battery cell configurations. For example, the battery 200 in alternate examples can include a 2x2 cell configuration, a 1x1 cell configuration, a 1x2 cell configuration, etc. depending on the desired application (e.g., the type of material handling vehicle, etc.).

As shown in FIG. 3, the battery 200 can also include a metal base plate 270. The metal base plate 270 can be formed using a variety of suitable metals (e.g., steel, aluminum, etc.) and can have different dimensions depending on the intended application of the battery 200. The metal base plate 270 can generally provide structure to serve as a base for the battery 200. Additionally, a lower metal tray 260 can be formed on or otherwise disposed above the metal base plate 270. The lower metal tray 260 can likewise be formed using a variety of suitable metals (e.g., steel, aluminum, etc.) and can have different dimensions depending on the intended application of the battery 200. The battery cell row 240 including the battery cell 242, the battery cell 244, and the battery cell 246 can then be formed on or otherwise disposed above the lower metal tray 260. Further, a middle metal tray can be disposed above battery cell row 240 including the battery cell 242, the battery cell 244, and the battery cell 246. The middle metal tray 250 can also be formed using a variety of suitable metals (e.g., steel, aluminum, etc.) and can have different dimensions depending on the intended application of the battery 200. The battery cell row 230 including the battery cell 232, the battery cell 234, and the battery cell 236 can then be formed on or otherwise disposed above the middle metal tray 250.

Then, as shown in FIG. 3, the top tray 210 can be disposed above the battery cell row 230 including the battery cell 232, the battery cell 234, and the battery cell 236. The top tray 210 can likewise be formed using a variety of suitable metals (e.g., steel, aluminum, etc.) and can have different dimensions depending on the intended application of the battery 200. Finally, the electronics tray 220 can be formed on or otherwise disposed above the top tray 210. The electronics tray 220 can include a variety of electronic and/or mechanical components for the battery 200, as will be detailed further below. As noted, the electronics tray 220 can be an integral part of the top tray 210, or the electronics tray 220 can be separate from the top tray 210. In examples where the electronics tray 220 is separate from the top tray 210, the electronics tray 220 can be secured to the top tray 210 in a variety of suitable manners (e.g., using various types of fasteners, etc.).

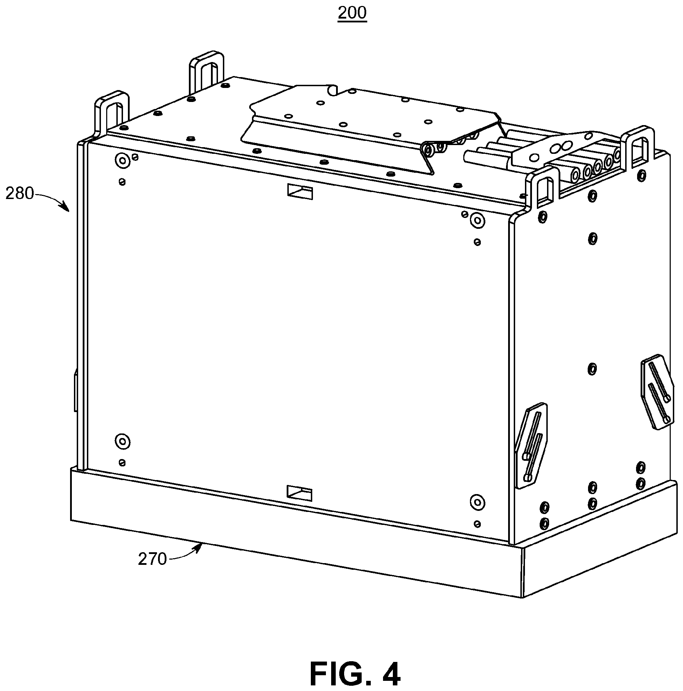

Referring to FIG. 4, an illustration showing an example implementation of a battery case 280 for the battery 200 is shown, in accordance with some aspects of the disclosure. Along with the metal base plate 270, the battery case 280 can be used to provide a sealed enclosure that protects internal components of the battery 200 (e.g., the battery cell row 230, the battery cell row 240, the electronics tray 220, etc.) from environmental factors. For example, the sealed enclosure formed by the battery case 280 and the metal base plate 270 can protect the internal components of the battery 200 from ingress of dust, liquid, chemicals, and other potential contaminants. The battery case 280 can be formed using various suitable materials (e.g., bent sheet steel, aluminum, etc.) and can be bolted to the metal base plate 270 to form the sealed enclosure, for example. The battery case 280 and/or the metal base plate 270 can include components that help form a sealed enclosure including, for example, gaskets, compression limiters, etc. In some examples, the metal base plate 270 can be considered part of the battery case 280 itself. Depending on the specific modular configuration of the battery 200, the battery case 280 can have different dimensions for a given application. Since the battery 200 may be sealed within the battery case 280 and disposed within the battery compartment 102 of the material handling vehicle 100, it can be difficult to remove heat from the battery cells (e.g., the battery cell 232, the battery cell 234, the battery cell 236, the battery cell 242, the battery cell 244, and the battery cell 246) during operation of the battery 200 without an air circulation system.

In general, thermal management (e.g., removing heat from the battery cell 232, the battery cell 234, the battery cell 236, the battery cell 242, the battery cell 244, and the battery cell 246) is required within the battery 200 because the battery 200 can not only be sealed within the battery case 200, but it can also further be disposed within the battery compartment 102 of the material handling vehicle 100. Without the inclusion of fans (e.g., the fan 212, the fan 214, the fan 216, and/or the fan 218) in the battery 200, about 90 percent of the heat transfer resistance can be between the walls of the battery cells (e.g., the battery cell 232, the battery cell 234, the battery cell 236, the battery cell 242, the battery cell 244, and the battery cell 246) and the walls of the battery case 280. In comparison, only about 10 percent of the heat transfer resistance can be between the battery case 280 and the ambient air without the inclusion of the fans in the battery 200. However, the use of the fan 212, the fan 214, the fan 216, and/or the fan 218 in the battery 200 can be advantageous because the use of the fan 212, the fan 214, the fan 216, and/or the fan 218 in the battery 200 can allow greater transfer of heat from the walls of the battery cells to the walls of the battery case 280. The air circulation provided within the battery 200 by the fan 212, the fan 214, the fan 216, and/or the fan 218 can provide convection within the battery 200 by providing thermal coupling between the battery cells and the battery case 280. Further, the specific design of the fan 212, the fan 214, the fan 216, and/or the fan 218 being included in the top tray 210 can provide effective rejection of heat through the top of the battery case 280.

The battery 200 can be divided into discrete thermal zones, where the boundary of each thermal zone can follow an empirically mapped heat loss gradient of the sealed enclosure (e.g., the battery case 280 and the metal base plate 270) for the battery 200. The thermal zones of the battery 200 can be equipped with dedicated temperature sensors or temperature sensing systems (e.g., thermistor pairs, resistance temperature detector (RTD) strings, etc.). The controller 222 can then use the temperature data associated with the different thermal zones of the battery 200 for various purposes. For example, the controller 222 can use the temperature data associated with the different thermal zones of the battery 200 to modulate heater power (e.g., by controlling the heater relays 352 as detailed below, etc.) or to adjust the duty cycle of the fan 212, the fan 214, the fan 216, and/or the fan 218, among other possible types of control functionality associated with the battery 200. The controller 222 can implement a control strategy to provide proportionally larger or faster cycling heater circuits for the thermal zones with higher conductive or convective losses while keeping the thermal zones with lower conductive or convective losses in a low power maintenance state. Accordingly, the division of the battery 200 into thermal zones can allow the controller 222 to dynamically re-allocate power as the ambient conditions of the material handling vehicle 100 (and its heat loss profile) change over time.

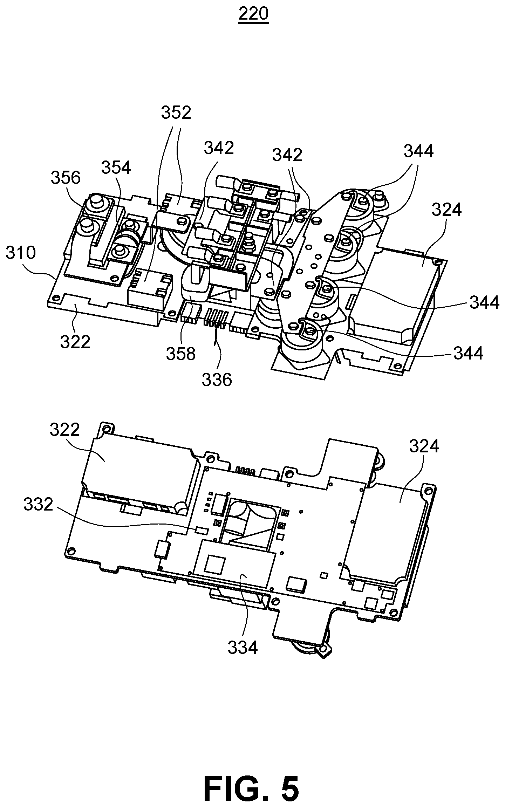

Referring to FIG. 5, an illustration showing example components of the electronics tray 220 is shown, in accordance with some aspects of the disclosure. In particular, FIG. 5 shows both a top view and a bottom view of the electronics tray 220. As shown, the electronics tray 220 can include a main controller 322, sub controllers 324, an interface board 332, a communications board 334, communication ports 326, main contactors 342, series contactors 344, heater relays 352, a system fuse 354, a shunt 356, and a Hall effect sensor 358. Each of these components of the electronics tray 220 can be formed on a metal base plate 310 of the electronics tray 220 as shown in FIG. 5. The controller 222 as shown in FIG. 2 can be implemented in a variety of ways. For example, the controller 222 can encompass both the main controller 322 and the sub controllers 324, or the controller 222 can encompass just the main controller 322, among other possible implementations.

The metal base plate 310 of the electronics tray 220 can be formed using a variety of suitable metals (e.g., steel, aluminum, etc.) and can have different dimensions depending on the intended application of the battery 200. The metal base plate 310 can generally provide structure to serve as a base for the electronics tray 220. The main controller 322 and the sub controllers 324 can be implemented using various suitable types of electronic controller components. The main controller 322 and the sub controllers 324 can each include various types of processing circuitry and various types of memory storing non-transitory machine-readable instructions that, when executed by the processing circuitry of the main controller 322 and the sub controllers 324, respectively, cause the main controller 322 and the sub controllers 324 to implement operations according to the machine-readable instructions. The main controller 322 can interact with the sub controllers 324 such that the main controller 322 acts as the main initiator of control transactions and the sub controllers 324 respond to communications receive from the main controller 322. The main controller 322 and the sub controllers 324 can operate as separate modules as part of a battery management system (BMS) of the battery 200.

The interface board 332 and the communications board 334 can both be implemented as printed circuit boards (PCBs), among other possible implementations. The interface board 332 can include circuitry for providing various electronic interfaces between components of the battery 200. For example, the interface board 332 can include circuitry to provide an electronic interface between the main controller 322 and the sub controllers 324, to provide an interface between the controller 222 and various sensors included as part of the battery 200 (e.g., to communicatively couple the controller 222 to the sensors). The communications board 334 can include circuitry to provide communications between the battery 200 and the material handling vehicle 100 (e.g., an interface between the battery 200 and one or more controllers on the material handling vehicle 100). The communication ports 336 can be communicatively coupled to the interface board 332 and/or to the communications board 334 and can be used to form various electrical connections between the battery 200 and external components and devices (e.g., to wire the battery 200 to one or more controllers on the material handling vehicle 100, etc.).

The main contactors 342 can include any suitable number of primary contactors used to protect the battery (e.g., to cut off current flow in a circuit under certain operating conditions). The series contactors 344 can likewise include any suitable number of contactors used to protect the battery (e.g., to cut off current flow in a circuit under certain operating conditions). The main contactors 342 can be common across all modular configurations of the battery 200 (e.g., 1x1 cell configuration, 2x2 cell configuration, etc.) and the series contactors 344 can vary depending on the specific modular configuration of battery 200 (e.g., the series contactors 344 can include two contactors for smaller battery sizes and four contactors for larger battery sizes). Both the main contactors 342 and the series contactors 344 can be implemented using various suitable types and configurations of contactors. Further, the main contactors 342 and the series contactors 344 can be implemented using other suitable components in some applications (e.g., different types of switches, relays, etc.).

The heater relays 352 can generally be used to control operation of one or more heaters to provide heat to the battery cell row 230 and the battery cell row 240. For example, upon power up of the battery 200, the ability to provide heat to the battery cell row 230 and the battery cell row 240 via one or more heaters can help the battery 200 reach a steady operational state than may otherwise be possible without the inclusion of the one or more heaters. The heater relays 352 can be implemented using various suitable types and configurations of relays, and the heaters can be implemented using various suitable types and configurations of heaters. Further, the heater relays 352 can be implemented using other suitable components in some applications (e.g., different types of switches, contactors, etc.). The battery 200 can include one of the heater relays 352 and one connected heater for each row of battery cells used in the battery 200, for example (e.g., a first heater and a first heater relay for the battery cell row 230, and a second heater and a second heater relay for the battery cell row 240).

The system fuse 354 can be used in the battery 200 to provide overcurrent protection for the battery 200 by interrupting current flow through the battery 200. The system fuse 354 can be implemented using various types and configurations of fuses depending on the application of the battery 200. Similarly, the shunt 356 can be used in the battery 200 to provide further overcurrent protection for the battery 200 by diverting current flow within the battery 200. The shunt 356 can also be implemented using various types and configurations of shunts depending on the application of the battery 200. The Hall effect sensor 358 can be used in the battery 200 to provide current sensing functionality and/or other types of sensing functionality. The Hall effect sensor 358 can be implemented using various types and configurations of Hall effect sensors depending on the application of the battery 200.

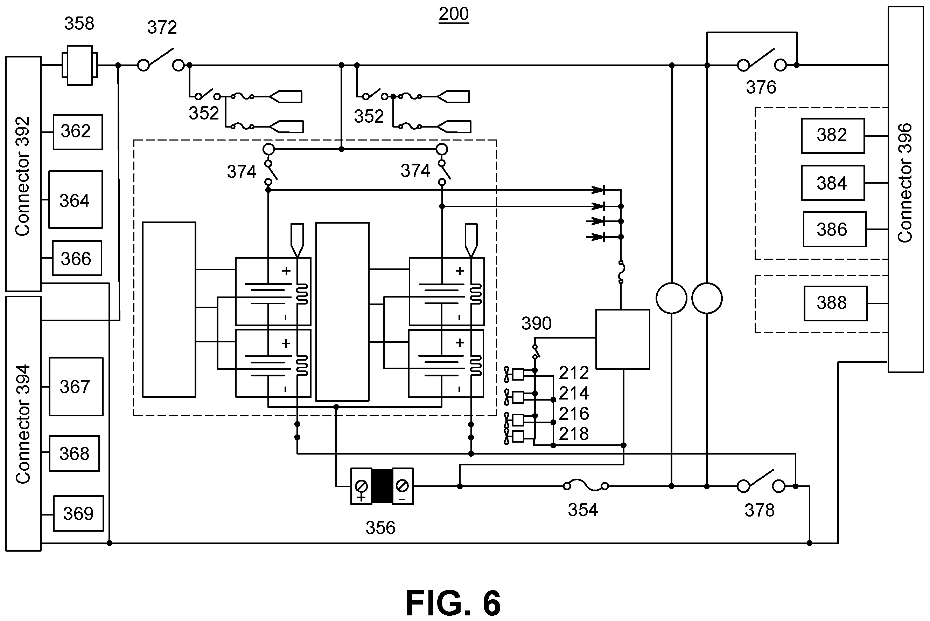

Referring to FIG. 6, an example schematic showing various components of the battery 200 is shown, in accordance with some aspects of the disclosure. From the schematic shown in FIG. 6, various example components of the electronics tray 220 can be seen, including the heater relays 352, the system fuse 354, the shunt 356, and the Hall effect sensor 358. The fan 212, the fan 214, the fan 216, and the fan 218 can also be seen. The schematic shown in FIG. 6 also illustrates various additional example components including a charger pilot circuit interface 362, a proximity sensor 364, a charger pilot circuit interface 367, a proximity sensor 368, a charger disconnect 372, a parallel string disconnect 374, a truck disconnect 376, a redundant disconnect 378, a termination circuit 382, a truck control interface 384, a truck wake interface 386, a truck control interface 388, a fan disconnect 390, a first charger connector port 392, a second charger connector port 394, and a truck connector port 396. The schematic shown in FIG. 6 represents just one possible implementation of various aspects of the disclosure pertaining to the battery 200, and other implementations are contemplated and possible.

The main contactors 342 can include, for example, the charger disconnect contactor 372, the truck disconnect contactor 376, and/or the redundant disconnect contactor 378 as shown in FIG. 6. The charger disconnect contactor 372 can be used to disconnect components of the battery 200 (e.g., from a power source) in the event of overcurrent conditions that may result from the connection of one or more charger devices to the battery 200 (e.g., via the first charger connector port 392 and the second charger connector port 394). For example, the controller 222 can receive current data from the Hall effect sensor 358 and/or other sensors included in the battery 200 and open the charger disconnect contactor 372 responsive to the determining that the current data exceeds one or more thresholds. The truck disconnect contactor 376 can be used to disconnect components of the battery 200 and/or the material handling vehicle 100 in the event of overcurrent conditions that may occur within the battery 200 and/or the material handling vehicle 100. For example, the controller 222 can receive data from the Hall effect sensor 358 and/or other sensors included in the battery 200 and open the truck disconnect contactor 376 responsive to the determining that the sensor data exceeds one or more thresholds. The redundant disconnect contactor 378 can likewise be used to disconnect components of the battery 200 and/or the material handling vehicle 100 in the event of overcurrent conditions that may occur within the battery 200 and/or the material handling vehicle 100. For example, the controller 222 can receive data from the Hall effect sensor 358 and/or other sensors included in the battery 200 and open the redundant disconnect contactor 378 responsive to the determining that the sensor data exceeds one or more thresholds.

The series contactors 344 can include, for example, the string disconnect contactors 374 as shown in FIG. 6. The string disconnect contactors 374 can be used to cut off current flow to and/or from the battery cells of the battery 200 to disconnect components of the battery 200 and/or the material handling vehicle 100 in the event of overcurrent conditions that may occur within the battery 200. As shown in the schematic of FIG. 6, the string disconnect contactors 374 can include a first contactor that is connected to a first row of battery cells (e.g., the battery cell row 230) and a second contactor that is connected in parallel with the first contactor and to a second row of battery cells (e.g., the battery cell row 240). The controller 222 can receive data from the Hall effect sensor 358 and/or other sensors included in the battery 200 and open one or more of the string disconnect contactors 374 responsive to the determining that the sensor data exceeds one or more thresholds, for example.

The first charger connector port 392 can be used to connect a first charger device to the battery 200 and the second charger connector port 394 can be used to connect a second first charger device to the battery 200. The truck connector port 396 can be used to connect the batter 200 to the material handling vehicle 100 (e.g., to a controller on the material handling vehicle 100, etc.). The charger pilot circuit interface 362 can include circuitry for providing a charging interface between the first charger device and the battery 200, and the charger pilot circuit interface 367 can include circuitry for providing a charging interface between the second charger device and the battery 200. The proximity sensor 364 can provide proximity sensing functionality such that the controller 222 can detect the presence of a connection between the first charger device and the battery 200, and the proximity sensor 368 can provide proximity sensing functionality such that the controller 222 can detect the presence of a connection between the second charger device and the battery 200.

The termination circuit 382 can be included in the battery 200 to provide an endpoint (termination) of a communication bus of the battery 200 (e.g., a CAN bus). The truck control interface 384 can be included in the battery 200 in order to provide a control interface between the battery 200 and the material handling vehicle 100. The truck wake interface 386 can be used to communicate a wake signal (e.g., power on signal) to the battery 200 via the material handling vehicle 100 (e.g., upon power up of the material handling vehicle 100). The truck control interface 388 can again be included in the battery 200 in order to provide a control interface between the battery 200 and the material handling vehicle 100. In particular, the truck control interface 384 can provide a Public Standard Interface (PSI) option, whereas the truck control interface 388 can provide a Power Source Limited (PSL) interface option for the battery 200. The fan disconnect 390 can be controlled by the controller 222 to provide power to and cut off power from the fan 212, the fan 214, the fan 216, and the fan 218.

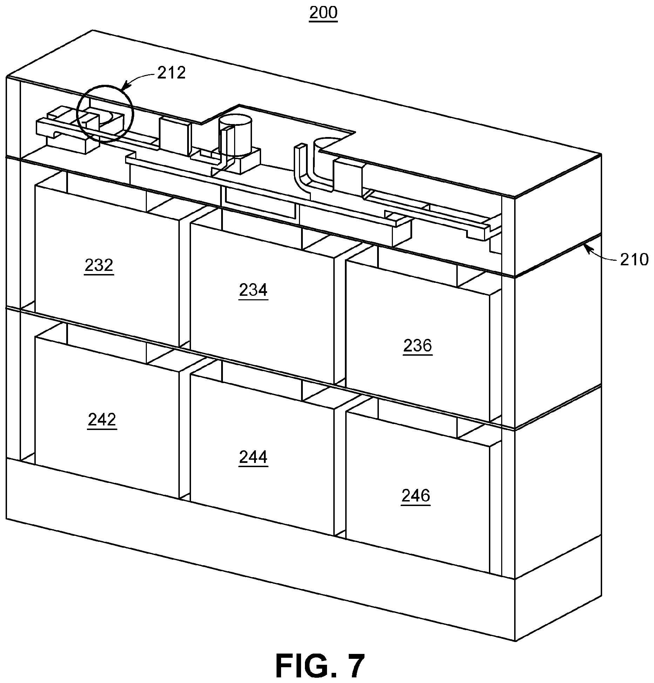

Referring to FIG. 7, an illustration showing an example implementation of the fan 212 included as part of the top tray 210 of the battery 200 is shown, in accordance with some aspects of the disclosure. Again, in the implementation of the battery 200 shown in FIG. 7, the battery 200 includes two rows of three battery cells each (2x3 cell configuration). In particular, the battery 200 includes both the battery cell row 230 including the battery cell 232, the battery cell 234, and the battery cell 236 as well as the battery cell row 240 including the battery cell 242, the battery cell 244, and the battery cell 246. Additionally, the top tray 210 is disposed above the battery cell row 230. In the implementation of the battery 200 shown in FIG. 7, the fan 212 is then disposed in an upper left corner of the top tray 210.

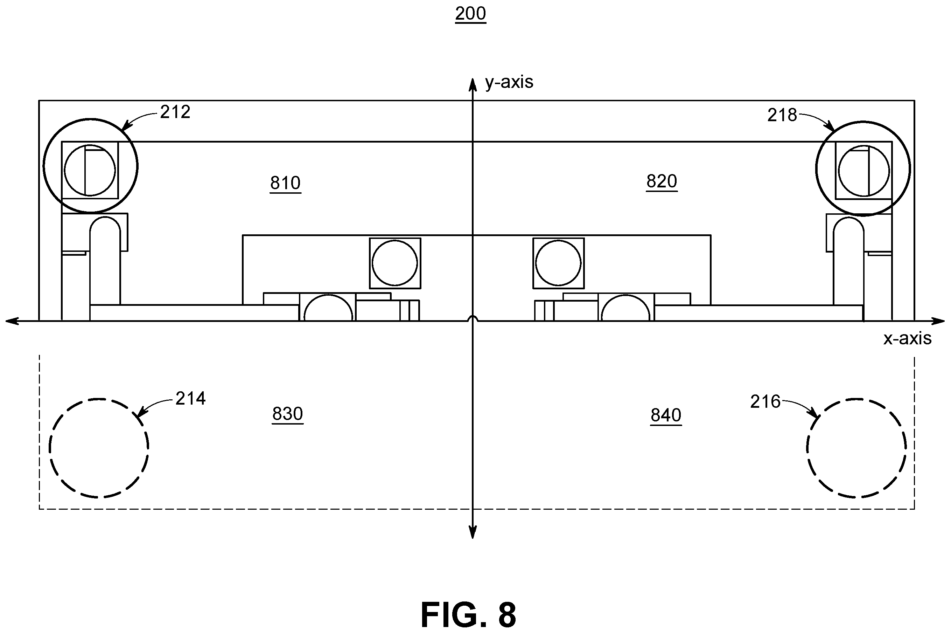

Referring to FIG. 8, an illustration showing another perspective view of the example implementation of the battery 200 from FIG. 7 is shown, in accordance with some aspects of the disclosure. The illustration shown in FIG. 8 provides a perspective view of the top tray 210 when looking down the z-axis. In the illustration shown in FIG. 8, the top tray 210 is divided into four distinct quadrants: an upper left quadrant 810, an upper right quadrant 820, a lower left quadrant 830, and a lower right quadrant 840. As shown, the upper left quadrant 810, the upper right quadrant 820, the lower left quadrant 830, and the lower right quadrant 840 can be divided in general by the x-axis and the y-axis. Again, the fan 212 can be seen as being disposed in the upper left quadrant 810 of the top tray 210, and generally in an upper left corner of the top tray 210. Then, as shown, the fan 218 can be disposed in the upper right quadrant 820 of the top tray 210, the fan 214 can be disposed in the lower left quadrant 830 of the top tray 210, and the fan 216 can be disposed in the lower right quadrant 840 of the top tray 210. More generally, the fan 212 and the fan 214 can disposed in a left half of the top tray 210, where the left half of the top tray 210 includes both the upper left quadrant 810 of the top tray 210 and the lower left quadrant 830 of the top tray 210. Similarly, the fan 216 and the fan 218 can more generally be disposed in a right half of the top tray 210, where the right half of the top tray 210 includes both the upper right quadrant 820 of the top tray 210 and the lower right quadrant 840 of the top tray 210.

The fan 212, the fan 214, the fan 216, and the fan 218 can be implemented using various suitable types and configurations of fans depending on the intended application of the battery 200. For example, the fan 212, the fan 214, the fan 216, and the fan 218 can each be implemented as 60x60x25 millimeter fans that are disposed in the top tray 210, among other possible examples. The operation of the fan 212, the fan 214, the fan 216, and the fan 218 can generally be controlled by the controller 222. For example, the controller 222 can control the fan 212 such that the fan 212 blows air in a first direction within the battery case 280 and the controller 222 can control the fan 218 such that the fan 218 blows air in a second direction within the battery case 280 that is opposite the first direction. The controller 222 can also control the fan 214 such that the fan 214 blows air in the first direction within the battery case 280 and the controller 222 can control the fan 216 such that the fan 216 blows air in the second direction within the battery case 280 that is opposite the first direction. The first direction can be an upward direction (e.g., away from the metal base plate 270 along the z-axis) and the second direction can be a downward direction (e.g., towards the metal base plate 270 along the z-axis).

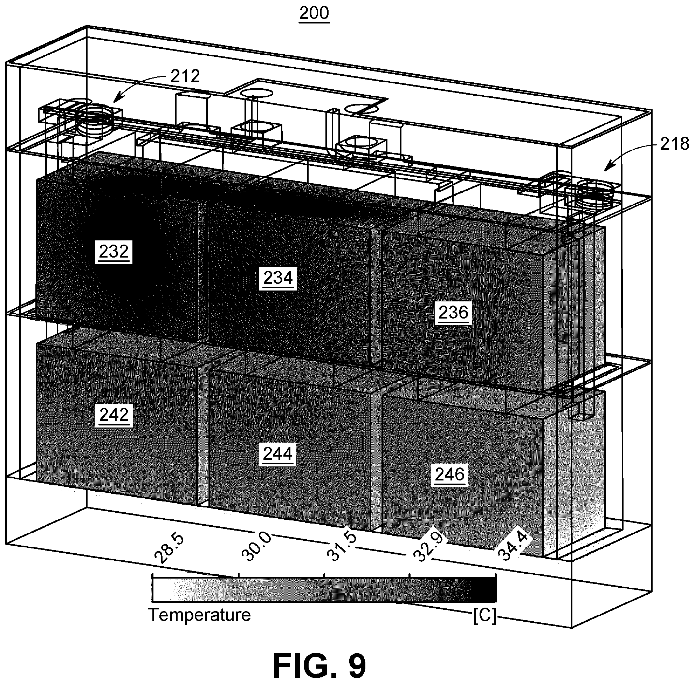

Referring to FIG. 9, an illustration showing an example temperature distribution across the battery cell 232, the battery cell 234, the battery cell 236 the battery cell 242, the battery cell 244, and the battery cell 246 during operation of the battery 200 is shown, in accordance with some aspects of the disclosure. As shown, the downstream battery cells (e.g., downstream of the air blown downward towards the metal base plate 270 by the fan 218) including the battery cell 232 and the battery cell 234 can be warmer during operation of the battery 200 than the upstream battery cells (e.g., upstream of the air blown downward towards the metal base plate 270 by the fan 218) including the battery cell 236 and the battery cell 246. Additionally, the top row of battery cells (the battery cell row 230) including the battery cell 232, the battery cell 234, and the battery cell 236 can be about 2.2 degrees Celsius warmer on average during operation of the battery 200 than the bottom row of battery cells (the battery cell row 240) including the battery cell 242, the battery cell 244, and the battery cell 246. Moreover, the left battery cells including the battery cell 232 and the battery cell 242 can be about 1.9 degrees Celsius warmer on average during operation of the battery 200 than the right battery cells including the battery cell 236 and the battery cell 246.

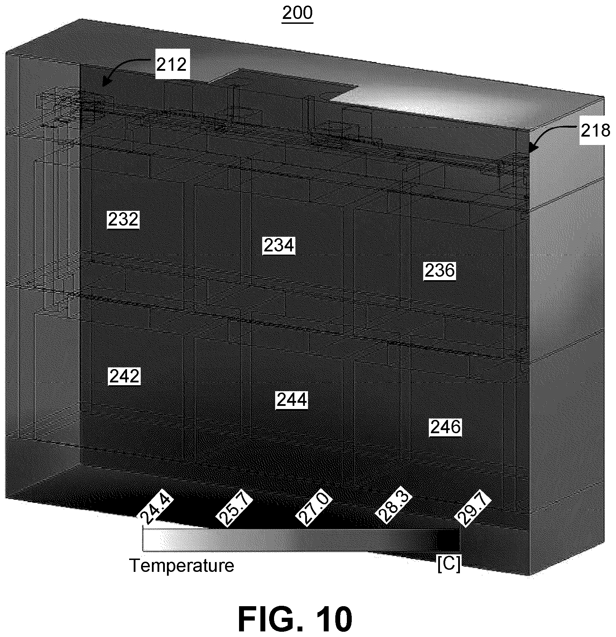

Referring to FIG. 10, an illustration showing an example temperature distribution across the battery case 280 during operation of the battery 200 is shown, in accordance with some aspects of the disclosure. As shown, the temperature distribution across the battery case 280 during operation of the battery 200 can be fairly uniform. However, the temperature distribution across the battery case 280 during operation of the battery 200 can be warmer where the return air (e.g., the air blown upwards by the fan 212 and/or the fan 214) impinges on the top of the battery case 280 and cooler where the air locally recirculates (e.g., the air ultimately blown downwards by the fan 216 and/or the fan 218). During operation of the battery 200, the battery case 280 can be about 7.7degrees Celsius warmer than the ambient air on average.

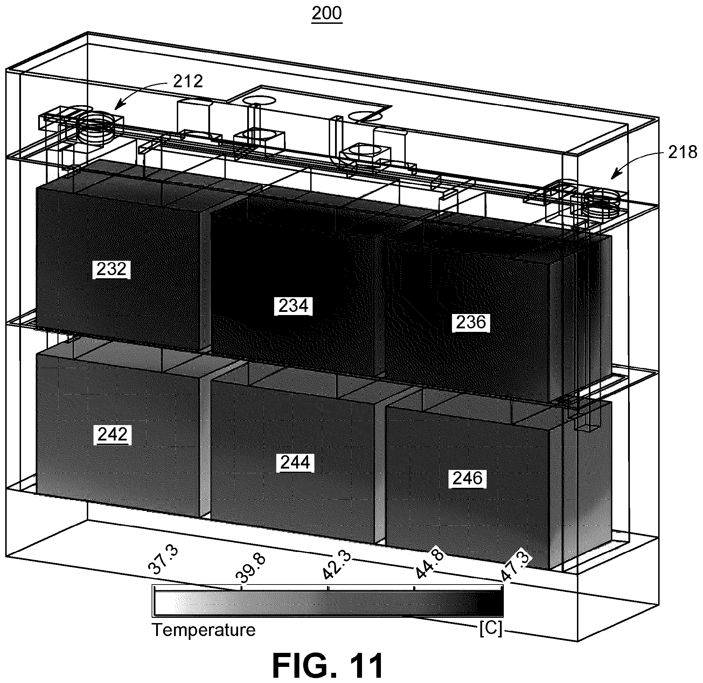

Referring to FIG. 11, an illustration showing an example temperature distribution across the battery cell 232, the battery cell 234, the battery cell 236 the battery cell 242, the battery cell 244, and the battery cell 246 during operation of the battery 200, including the effects of heat generated by contractors of the battery 200, is shown, in accordance with some aspects of the disclosure. Among components of the battery 200, the contactors (e.g., the main contactors 342, series contactors 344) can be a significant source of heat generation within the battery case 280 during operation of the battery 200. As shown in FIG. 11, when accounting for the heat generated by the contactors, the upstream battery cells (e.g., upstream of the air blown downward towards the metal base plate 270 by the fan 218) including the battery cell 236 and the battery cell 246 can actually be warmer than the downstream battery cells (e.g., downstream of the air blown downward towards the metal base plate 270 by the fan 218) including the battery cell 232 and the battery cell 242 during operation of the battery 200.

When accounting for the heat generated by the contactors of the battery 200, the average temperature of the battery cells including the battery cell 232, the battery cell 234, the battery cell 236 the battery cell 242, the battery cell 244, and the battery cell 246 can be about 43.4 degrees Celsius as compared to about 31.8 degrees Celsius without accounting for the heat generated by the contactors. The top row of battery cells (the battery cell row 230) including the battery cell 232, the battery cell 234, and the battery cell 236 can be about 4.0 degrees Celsius warmer on average during operation of the battery 200 than the bottom row of battery cells (the battery cell row 240) including the battery cell 242, the battery cell 244, and the battery cell 246 when accounting for the heat generated by the contactors. Moreover, the left battery cells including the battery cell 232 and the battery cell 242 can be about 1.6 degrees Celsius cooler on average during operation of the battery 200 than the right battery cells including the battery cell 236 and the battery cell 246 when accounting for the heat generated by the contactors.

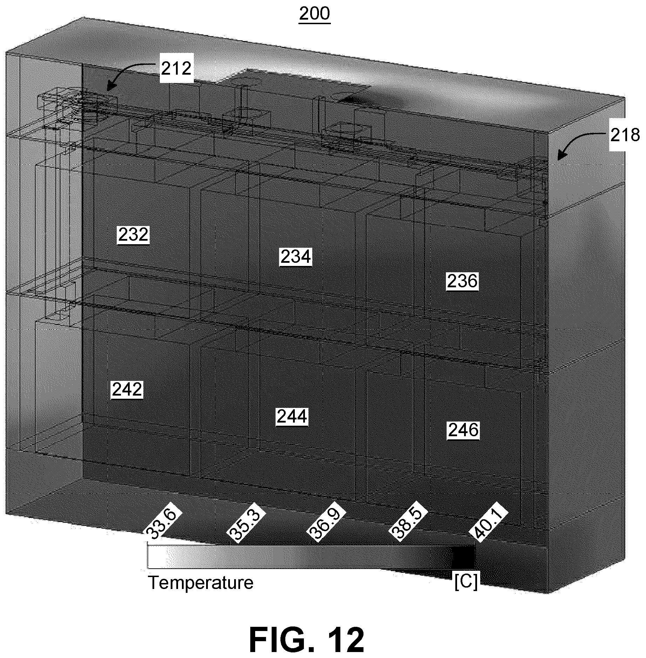

Referring to FIG. 12, an illustration showing an example temperature distribution across the battery case 280 during operation of the battery 200, including the effects of heat generated by the contactors, is shown, in accordance with some aspects of the disclosure. As shown, the temperature distribution across the battery case 280 during operation of the battery 200 when also accounting for the heat generated by the contactors can be fairly uniform. However, in this case, the temperature distribution across the battery case 280 during operation of the battery 200 when accounting for the heat generated by the contactors can be hottest near the downstream contactor (e.g., the truck disconnect 376) and hotter on the bottom of the battery case 28- (e.g., below the battery cell row 240) without external convection. On average, during operation of the battery 200 when accounting for the heat generated by the contactors, the battery case 280 can be about 16.8 degrees Celsius warmer than the ambient air.

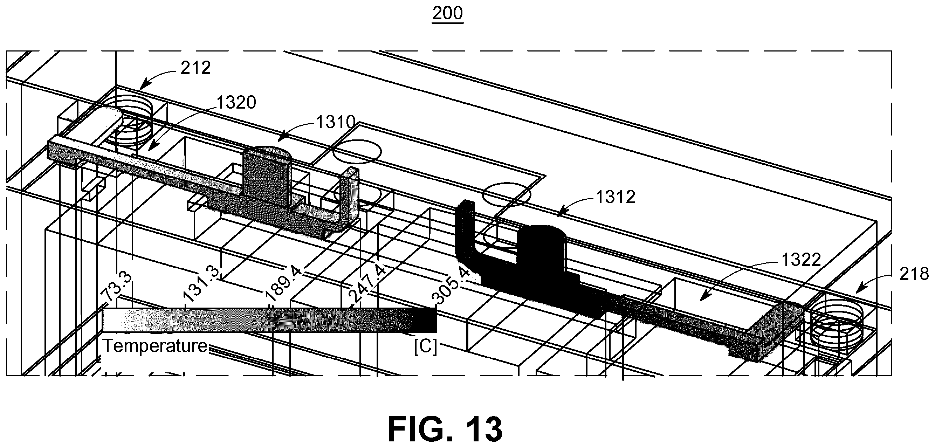

Referring to FIG. 13, an illustration showing an example temperature distribution across various components of the electronics tray 220 during operation of the battery 200 is shown, in accordance with some aspects of the disclosure. In particular, the illustration in FIG. 13 shows an example temperature distribution across an example contactor 1310, an example contactor 1312, an example busbar 1320, and an example busbar 1322 of the electronics tray 220. The contactor 1310 and the contactor 1320 shown in FIG. 13 can be two of the main contactors 342 as shown in FIG. 5, for example. The busbar 1320 and the busbar 1322 can be implemented using various suitable types of busbars in various configurations to form different electrical connections within the battery 200 (e.g., between the battery cell row 230 and the battery cell row 240 of the battery 200). As shown, the contactor 1310, the contactor 1312, the busbar 1320, and the busbar 1322 can run particularly hot during operation of the battery 200. The downstream contactor and busbar (e.g., the contactor 1312 and the busbar 1322 that are downstream of the air blown upward by the fan 212) in particular can run hot during operation of the battery 200.

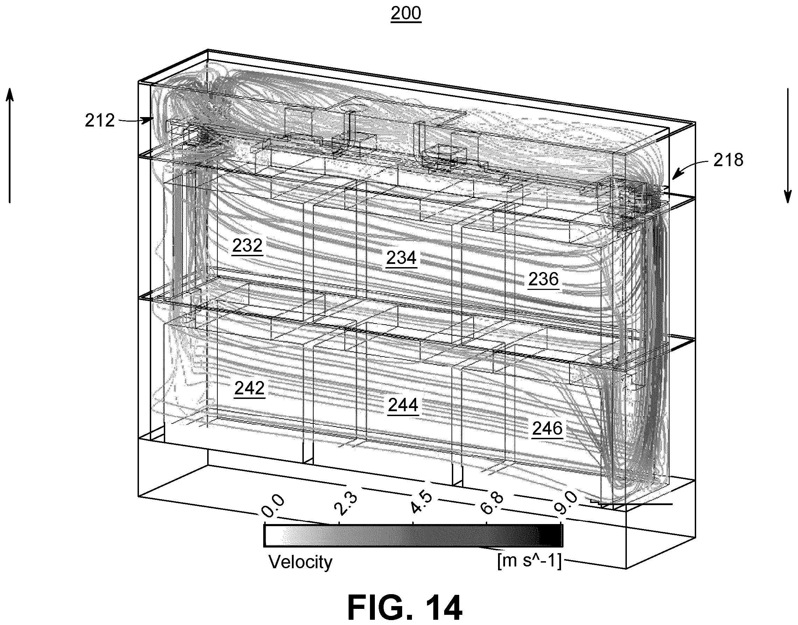

Referring to FIG. 14, an illustration showing an example air flow velocity distribution that can be created within the battery case 280 during operation of the battery 200 is shown, in accordance with some aspects of the disclosure. In particular, the air flow velocity distribution shown in FIG. 14 can be created using at least two of the fan 212, the fan 214, the fan 216, and/or the fan 218. As shown, the fan 212, the fan 214, the fan 216, and/or the fan 218 can generate the highest magnitude of airflow within the battery case 280 in the area between the battery cell row 230 and the battery cell row 240. Additionally, the fan 212, the fan 214, the fan 216, and/or the fan 218 can generate significant airflow within the battery case 280 in the areas near the fan 212, the fan 214, the fan 216, and/or the fan 218 and on the outer peripheries of the battery cell row 230 and the battery cell row 240.

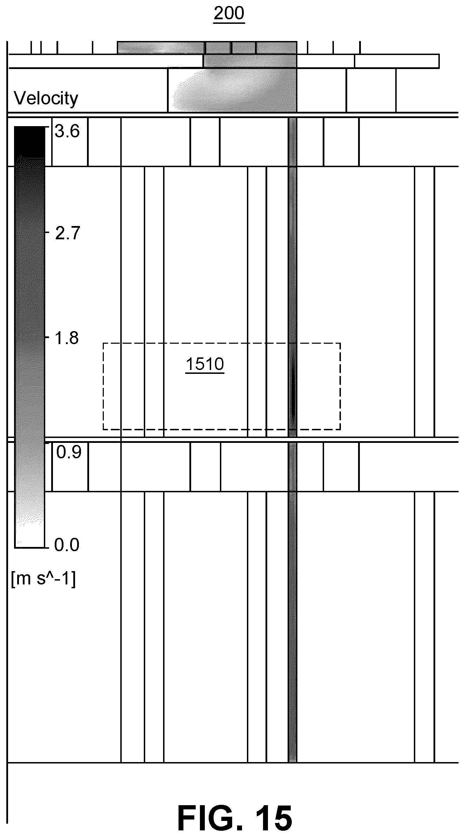

Referring to FIG. 15, an illustration showing another example of an air flow velocity distribution that can be created within the battery case 280 during operation of the battery 200 is shown, in accordance with some aspects of the disclosure. The air flow velocity distribution shown in FIG. 15 can again be created using at least two of the fan 212, the fan 214, the fan 216, and/or the fan 218. In particular, the air flow velocity distribution shown in FIG. 15 demonstrates an example air flow velocity distribution within the battery case 280 from the perspective of a center plane of the battery 200 (e.g., a cross section taken along the y-axis shown in FIG. 8). As shown, the fan 212, the fan 214, the fan 216, and/or the fan 218 can again generate the highest magnitude of airflow within the battery case 280 in an area 1510 between the battery cell row 230 and the battery cell row 240.

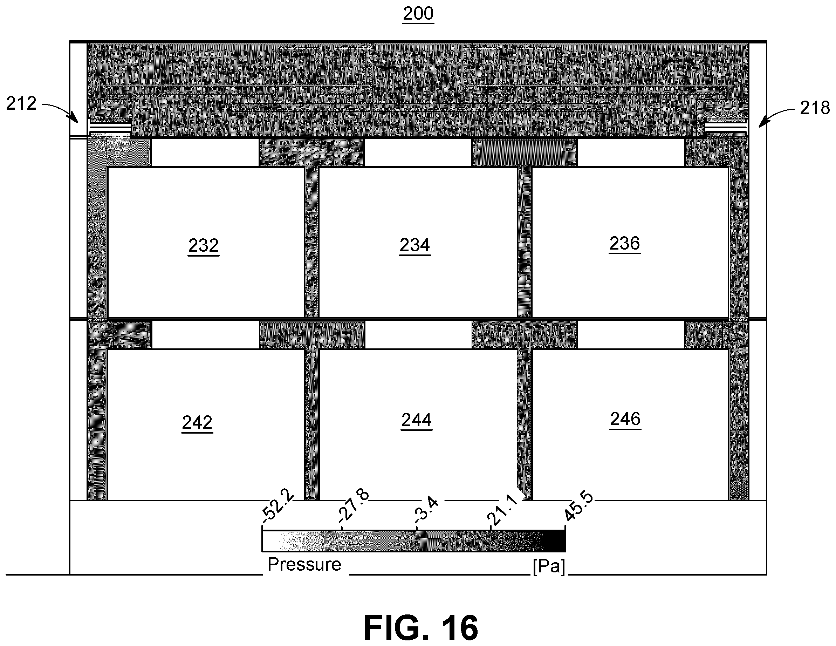

Referring to FIG. 16, an illustration shown an example of a pressure distribution that can be created within the battery case 280 during operation of the battery 200 is shown, in accordance with some aspects of the disclosure. In particular, the pressure distribution shown in FIG. 16 can be created using at least two of the fan 212, the fan 214, the fan 216, and/or the fan 218. The pressure distribution shown in FIG. 16 demonstrates an example pressure distribution within the battery case 280 from the perspective of a symmetry plane of the battery 200 (e.g., a cross section taken along the x-axis shown in FIG. 8). As shown, the design of the battery 200 in this example may incorporate a pressure rise of about 40 Pascal (Pa) or 0.16 inches of water to drive 30 cubic feet per minute (CFM) fan flow from the fan 212, the fan 214, the fan 216, and/or the fan 218.

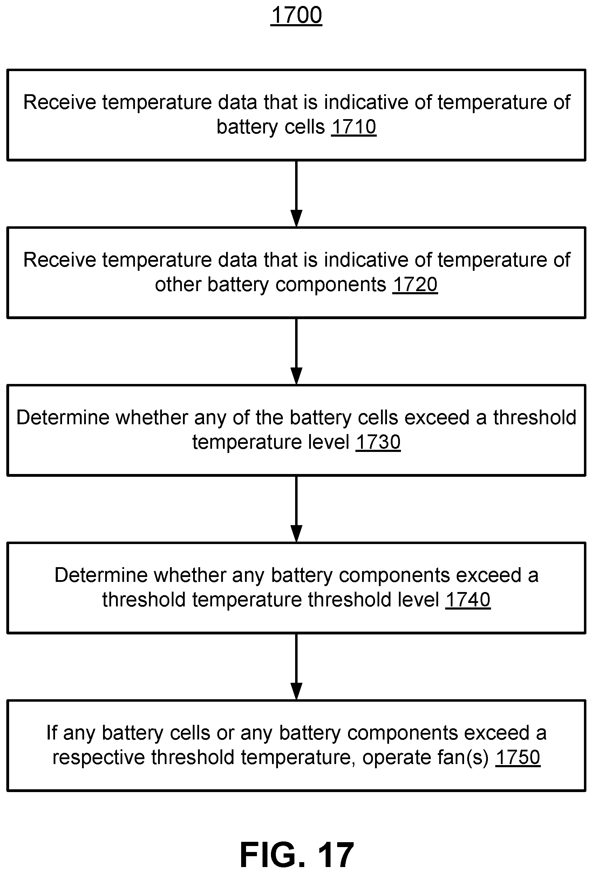

Referring to FIG. 17, a flowchart illustrating an example process 1700 for providing air circulation within the battery 200 is shown, in accordance with some aspects of the disclosure. The process 1700 can be performed be performed by the controller 222 and at least two of the fan 212, the fan 214, the fan 216, and/or the fan 218, for example. The process 1700 generally includes receiving temperature data associated with the battery 200 and controlling the operation of the fan 212, the fan 214, the fan 216, and/or the fan 218 based on the temperature data. By implementing the process 1700 within the battery 200, the fan 212, the fan 214, the fan 216, and/or the fan 218 can provide transfer of heat from the cells of the battery 200 and/or other components of the battery 200 (e.g., the main contactors 342, etc.) to the walls of the battery 200 (e.g., the battery case 280). As a result, the fan 212, the fan 214, the fan 216, and/or the fan 218 can provide thermal coupling between the battery case and the battery cell 232, the battery cell 234, the battery cell 236, the battery cell 242, the battery cell 244, and the battery cell 246 to provide convection within the battery 200 and reject heat through the top of the battery 200 (e.g., through the portion of the battery case 200 disposed above the top tray 210).

At step 1710, the process 1700 can include receiving temperature data that is indicative of the temperature of the battery cells of the battery 200. For example, at step 1710, the controller 222 can receive temperature data indicative of the temperature of each of the battery cell 232, the battery cell 234, the battery cell 236, the battery cell 242, the battery cell 244, and the battery cell 246. The controller 222 can receive the temperature data that is indicative of the temperature of the battery cells of the battery 200 in a variety of suitable manners. For example, the battery 200 can include various suitable types and configurations of temperature sensors that can be included in the battery 200 to generate and provide the temperature data that is indicative of the temperature of the battery cells to the controller 222.

At step 1720, the process 1700 can include receiving temperature data that is indicative of the temperature of one or more other components of the battery 200 besides the battery cells. For example, at step 1720, the controller 222 can receive temperature data that is indicative of the temperature of any of the components of the electronics tray 220 such as, for example, the main contactors 342 and/or the series contactors 344. The controller 222 can receive temperature data that is indicative of the temperature of one or more busbars of the battery 200, temperature data that is indicative of ambient air temperature at various locations within the battery 200, temperature data that is indicative of the temperature of the charge connectors ports of the battery 200 (e.g., the charge connector ports shown in the example schematic of FIG. 6), and/or temperature data that is indicative of any other temperature that may be associated with the battery 200. The controller 222 can again receive the temperature data at step 1720 in a variety of suitable manners. For example, the battery 200 can include various suitable types and configurations of temperature sensors that can be included within the battery 200 to generate and provide the temperature data to the controller 222 at step 1720.

At step 1730, the process 1700 can include determining whether the temperature of any of the battery cells of the battery 200 exceeds a threshold temperature level. For example, at step 1730, the controller 222 can evaluate the temperature data received at step 1710 by comparing the temperature data to one or more suitable threshold temperature levels. Depending on various factors associated with the design of the battery 200, different threshold temperature levels can be used in step 1730. For example, the threshold temperature levels used in step 1730 can depend on the specific type of battery cell (e.g., the capacity, the weight, the energy density, the voltage rating, the nominal energy, the dimensional characteristics (e.g., height, length, width, etc.), etc.) and/or the specific location of the battery cell at issue within the battery 200 (e.g., top row, bottom row, left side, right side, etc.). Further, the threshold temperature levels used in step 1730 can vary depending on the modular cell configuration of the battery 200 (e.g., 2x3 cell configuration, 2x2 cell configuration, 1x1 cell configuration, 1x2 cell configuration, etc.). Additionally, the threshold temperature levels used in step 1730 can vary depending on the quantity, type, and/or location of fans included in the battery 200 (e.g., the fan 212, the fan 214, the fan 216, and/or the fan 218). At step 1730, the controller 222 can use the same threshold temperature level for each of the battery cells included in the battery 200, or the controller 222 can use at least one different threshold among the battery cells included in the battery 200.

At step 1740, the process 1700 can include determining whether the temperature of any components of the battery 200 exceeds a threshold temperature level. For example, the controller 222 can evaluate the temperature data received at step 1720 by comparing the temperature data to one or more suitable threshold temperature levels. The threshold temperature levels used by the controller 222 at step 1740 can again vary depending on a variety of factors. For example, the controller 222 can use a first threshold temperature level for one or more busbars of the battery 200 and a second threshold temperature level for the main contactors 342. The threshold temperature levels used in step 1740 can again depend on the specific type of battery cell that is used within the battery 200, the modular cell configuration of the battery 200, and/or the quantity, type, and/or location of fans included in the battery 200. Step 1740 can also include determining whether a temperature associated with any of the thermal zones of the battery 200 exceed a threshold temperature level.

At step 1750, the process 1700 can include operating one or more fans of the battery 200 if any of the temperature data received at step 1710 or step 1720 exceeds the respective threshold temperature level based on the evaluation at step 1730 or step 1740. For example, if the controller 222 determines that any of the temperature threshold levels evaluated at step 1730 or step 1740 have been exceeded based on the temperature data received at step 1710 or step 1720, the controller 222 can send one or more appropriate control signals to operate the fan 212, the fan 214, the fan 216, and/or the fan 218. The controls signals can operate the fan 212, the fan 214, the fan 216, and/or the fan 218 by turning the fan 212, the fan 214, the fan 216, and/or the fan 218 on or off, controlling a rotational speed of the fan 212, the fan 214, the fan 216, and/or the fan 218, controlling a duty cycle of the fan 212, the fan 214, the fan 216, and/or the fan 218, and/or controlling a rotational direction of the fan 212, the fan 214, the fan 216, and/or the fan 218.

It should be noted that, while the steps of the process 1700 are shown in a particular order in FIG. 17, the process 1700 may not include all steps shown, may include additional steps, or may include the steps in a different order.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Within this specification, aspects have been described in a way which enables a clear and concise specification to be written, but it is intended and will be appreciated that aspects may be variously combined or separated without parting from the present disclosure. For example, it will be appreciated that all preferred features described herein are applicable to all aspects of the disclosed technology described herein.

Thus, while the disclosed technology has been described in connection with particular aspects and examples, the disclosed technology is not necessarily so limited, and that numerous other aspects, examples, uses, modifications and departures from the aspects, examples, and uses are intended to be encompassed by the claims attached hereto. The entire disclosure of each patent and publication cited herein is incorporated by reference, as if each such patent or publication were individually incorporated by reference herein.

Various features and advantages of the present disclosure are set forth in the following claims.

## Claims

1. A battery (200) for a material handling vehicle (100), the battery (200) comprising:
a metal base plate (270);
a battery case (280) secured to the metal base plate (270) to form a sealed enclosure for the battery (200);
a row of one or more battery cells (230, 240) disposed above the metal base plate (270);
and
a top tray (210) disposed above the row of battery cells (230, 240), the top tray (210) comprising:
a first fan (212) to blow air in a first direction within the battery case (280); and
a second fan (218) to blow air in a second direction within the battery case (280), the second direction opposite the first direction.

2. The battery (200) of claim 1, wherein:
the first direction is away from the metal base plate (270) and the row of battery cells (230, 240); and
the second direction is towards the metal base plate (270) and the row of battery cells (230, 240).

3. The battery (200) of claim 1 or 2, wherein:
the first fan (212) is disposed in an upper left quadrant (810) of the top tray (210); and
the second fan (218) is disposed in an upper right quadrant (820) of the top tray (210).

4. The battery (200) of claim 1 or 2 or 3, the top tray (210) of the battery (200) comprising:
a third fan (214) to blow air in the first direction within the battery case (280); and
a fourth fan (216) to blow air in the second direction within the battery case (280).

5. The battery (200) of claim 4, wherein:
the first fan (212) is disposed in an upper left quadrant (810) of the top tray (210);
the second fan (218) is disposed in an upper right quadrant (820) of the top tray (210);
the third fan (214) is disposed in a lower left quadrant (830) of the top tray (210); and
the fourth fan (216) is disposed in a lower right quadrant (840) of the top tray (210).

6. The battery (200) of any of the preceding claims, comprising an electronics tray (220) disposed on the top tray (210), the electronics tray (220) comprising a controller (222) and contactors (1310, 1312) for the battery (200).

7. The battery (200) of claim 6, wherein the controller (222) comprises circuitry configured to operate the first fan (212) and the second fan (218) responsive to determining that a temperature of at least one battery cell (232, 234, 236, 242, 244, 246) of the row of battery cells (230, 240) exceeds a threshold.

8. The battery (200) of claim 7, wherein the circuitry of the controller (222) is configured to operate the first fan (212) and the second fan (218) by turning the first fan (212) and the second fan (218) on responsive to determining that the temperature of at least one battery cell (232, 234, 236, 242, 244, 246) of the row of battery cells (230, 240) exceeds the threshold.

9. The battery (200) of claim 7 or 8, wherein the circuitry of the controller (222) is configured to operate the first fan (212) and the second fan (218) by controlling a duty cycle of the first fan (212) and the second fan (218) responsive to determining that the temperature of at least one battery cell (232, 234, 236, 242, 244, 246) of the row of battery cells (230, 240) exceeds the threshold.

10. The battery (200) of claim 7 or 8 or 9, wherein the circuitry of the controller (222) is configured to operate the first fan (212) and the second fan (218) by controlling a rotational speed of the first fan (212) and the second fan (218) responsive to determining that the temperature of at least one battery cell (232, 234, 236, 242, 244, 246) of the row of battery cells (230, 240) exceeds the threshold.

11. The battery (200) of any of the claims 7 to 10, wherein the circuitry of the controller (222) is configured to operate the first fan (212) and the second fan (218) by controlling a rotational direction of the first fan (212) and the second fan (218) responsive to determining that the temperature of at least one battery cell (232, 234, 236, 242, 244, 246) of the row of battery cells (230, 240) exceeds the threshold.

12. The battery (200) of any of the claims 6-11, wherein the controller (222) comprises circuitry configured to operate at least one of the first fan (212) or the second fan (218) responsive to determining that a temperature of at least one of the contactors (1310, 1312) exceeds a threshold.

13. The battery (200) of any of the claims 6 to 12, wherein:
the electronics tray (220) comprises a busbar (1320, 1322); and
the controller (222) comprises circuitry configured to operate at least one of the first fan (212) or the second fan (218) responsive to determining that a temperature of the busbar (1310, 1322) exceeds a threshold.

14. The battery (200) of claim 13, wherein the controller (222) comprises circuitry configured to operate at least one of the first fan (212) or the second fan (218) responsive to determining that a temperature of at least one of the contactors (1310, 1312) exceeds a second threshold that is different from the first threshold.

15. The battery (200) of claim , wherein the one or more battery cells (232, 234, 236, 242, 244, 246) comprise one or more lithium iron phosphate (LFP) battery cells.
